# EUROPÄISCHE PATENTANMELDUNG

(11) **EP 3 751 481 A1**
(43) Veröffentlichungstag der Anmeldung: **16.12.2020**
(21) Anmeldenummer: 20171600.8
(22) Anmeldetag: 27.04.2020
(51) Int. Cl.: G06Q 10/06, G06Q 10/04, G06Q 50/30

(54) **VERFAHREN ZUM UMVERTEILEN VON FAHRRÄDERN EINES FAHRRADLEIHSYSTEMS**

(30) Priorität: 13.05.2019 DE 102019206861
(71) Anmelder: Siemens Mobility GmbH, 81739 München (DE)
(72) Erfinder: Becquin, Guillaume, 86150 Augsburg (DE); Bradley, John, 80809 Muenchen (DE); Montgomery, David, 87650 Baisweil (DE); Raap, Manon, 85579 Neubiberg (DE)

(57) **Zusammenfassung**

Die Erfindung betrifft Verfahren zum Umverteilen von Fahrrädern eines Fahrradleihsystems, wobei das Fahrradleihsystem Fahrräder, Stationen und mindestens ein Verteilerfahrzeug umfasst, wobei jede Station eine vorgegebene Anzahl von Abstellplätzen aufweist, umfassend die Schritte:
- Auslesen von Standorten der Fahrräder und einer Anzahl der belegten und/oder freien Abstellplätze der Stationen aus einem Systemdatenspeicher;
- Vorhersage eines zukünftigen Zustands des Fahrradleihsystems, wobei der zukünftige Zustand zukünftige Standorte der Fahrräder und zukünftige Anzahlen von freien und/oder belegten Abstellplätzen der Stationen umfasst;
- Ermitteln von Stationen, für die aufgrund des zukünftigen Zustands Handlungsbedarf besteht, wobei der Handlungsbedarf ein Entfernen oder ein Hinzufügen von Fahrrädern umfasst;
- Berechnen einer optimalen Umverteilungsroute für das Verteilerfahrzeug oder optimalen Umverteilungsrouten für die Verteilerfahrzeuge, wobei mehrere Umverteilungsrouten für jedes Verteilerfahrzeug berechnet werden, wobei die Umverteilungsrouten jeweils Anweisungen, welche Stationen anzufahren und ob an diesen Stationen Fahrräder aufzunehmen oder abzustellen sind, umfasst, wobei die Berechnung der optimalen Umverteilungsroute beziehungsweise der optimalen Umverteilungsrouten derart durchgeführt wird, dass der Handlungsbedarf aufgrund der durch die Umverteilungsrouten erfolgten Umverteilung der Fahrräder möglichst gering wird;
- Ausgabe der optimalen Umverteilungsroute beziehungsweise der optimalen Umverteilungsrouten an das Verteilerfahrzeug beziehungsweise die Verteilerfahrzeuge.

## Beschreibung

Die Erfindung betrifft ein Verfahren zum Umverteilen von Fahrrädern eines Fahrradleihsystems. Ferner betrifft die Erfindung ein Computerprogramm zur Ausführung des Verfahrens und eine Steuereinheit zur Ausführung des Verfahrens.

Fahrradleihsysteme weisen im Allgemeinen Fahrräder auf, die mittels einer Smartphone-App oder einer Kundenkarte entsperrt und benutzt werden können. Zu unterscheiden sind hier Stationsbasierte Systeme, bei denen Fahrräder ausschließlich an Stationen entliehen und zurückgebracht werden können und offene Systeme, bei denen die Fahrräder ohne Stationen zur Verfügung stehen. Ferner existieren noch sogenannte Hybridsysteme, bei denen einerseits Stationen zur Ausleihe und/oder Rückgabe der Fahrräder zur Verfügung stehen und andererseits Fahrräder auch außerhalb der Stationen abgestellt beziehungsweise geliehen werden können. Die vorliegende Erfindung ist im Wesentlichen für stationsbasierte Systeme und Hybrid-Systeme gedacht. Die Fahrräder können auch als Elektrofahrräder ausgestaltet sein. Ferner sollen auch Roller, Scooter oder ähnliche Fortbewegungsmittel, bei denen Muskelkraft und/oder ein Elektroantrieb zum Einsatz kommen kann, unter den Begriff Fahrrad beziehungsweise Elektrofahrrad fallen und in dieser Patentanmeldung als Fahrrad beziehungsweise Elektrofahrrad verstanden werden.

Im Allgemeinen werden solche Fahrradleihsysteme sich selbst überlassen, so dass keine Relokalisierungen der Fahrräder durchgeführt werden oder es werden Standorte der Fahrräder im Betrieb verändert. Dies kann durch Personal erfolgen, entweder über Nacht oder auch tagsüber im laufenden Betrieb. Dabei werden Fahrräder, die an wenig nachgefragten Standorten stehen, in Verteilerfahrzeuge geladen und, nachdem das Verteilerfahrzeug an einen Standort mit hoher Nachfrage gefahren wurde, wieder ausgeladen. Dies kann beispielsweise an Stationen durchgeführt werden. Alternativ oder zusätzlich können auch frei abgestellte Fahrräder aufgenommen werden oder Fahrräder außerhalb der Stationen abgestellt werden. Durch dieses Vorgehen wird ein Umverteilen der Fahrräder innerhalb des Fahrradleihsystems ermöglicht. Dabei wird der aktuelle Zustand des Fahrradleihsystems ermittelt und Engpässe beziehungsweise Überschüsse an Fahrrädern durch das Personal ausgeglichen.

Der Erfindung liegt die Aufgabe zugrunde, ein verbessertes Verfahren zum Umverteilen von Fahrrädern eines Fahrradleihsystems zur Verfügung zu stellen. Eine weitere Aufgabe der Erfindung ist es, ein entsprechendes Computerprogramm und eine Steuereinheit zur Verfügung zu stellen.

Diese Aufgabe wird durch ein Verfahren zum Umverteilen von Fahrrädern eines Fahrradleihsystems sowie ein Computerprogramm und eine Steuereinheit zur Durchführung des Verfahrens gelöst. Vorteilhafte Ausgestaltungen sind in den Unteransprüchen angegeben.

Ein Fahrradleihsystem umfasst Fahrräder, Stationen und mindestens ein Verteilerfahrzeug, wobei jede Station eine vorgegebene Anzahl von Abstellplätzen aufweist. In einem Verfahren zum Umverteilen von Fahrrädern des Fahrradleihsystems werden Standorte der Fahrräder und eine Anzahl der belegten und/oder freien Abstellplätze der Stationen aus einem Systemdatenspeicher ausgelesen. Der Systemdatenspeicher kann dazu in einer Steuereinheit angeordnet sein, die eine Recheneinheit zur Durchführung des Verfahrens umfasst. Hierzu kann mittels der Recheneinheit beispielsweise ein entsprechendes Computerprogramms ausgeführt werden, welches auf einem maschinenlesbaren Speicher vorliegen kann. Alternativ kann der Systemdatenspeicher auch außerhalb der Recheneinheit angeordnet sein. Aus den ausgelesenen Standorten und der Anzahl der belegten beziehungsweise freien Abstellplätze kann anschließend ein zukünftiger Zustand des Fahrradleihsystems vorhergesagt werden, wobei der zukünftige Zustand zukünftige Standorte der Fahrräder und zukünftige Anzahlen von freien und/oder belegten Abstellplätzen der Stationen umfasst. Anschließend können Stationen, für die aufgrund des zukünftigen Zustands Handlungsbedarf besteht, ermittelt werden. Der Handlungsbedarf umfasst dabei ein Entfernen oder ein Hinzufügen von Fahrrädern. Nun wird eine optimale Umverteilungsroute für das Verteilerfahrzeug oder optimale Umverteilungsrouten für die Verteilerfahrzeuge berechnet. Hierzu werden mehrere Umverteilungsrouten für jedes Verteilerfahrzeug berechnet, wobei die Umverteilungsrouten jeweils Anweisungen, welche Stationen anzufahren und ob an diesen Stationen Fahrräder aufzunehmen oder abzustellen sind, umfasst. Die Berechnung der optimalen Umverteilungsroute beziehungsweise der optimalen Umverteilungsrouten wird derart durchgeführt, dass der Handlungsbedarf aufgrund der durch die Umverteilungsrouten erfolgten Umverteilung der Fahrräder möglichst gering wird. Die optimale Umverteilungsroute beziehungsweise die optimalen Umverteilungsrouten wird dann an das Verteilerfahrzeug beziehungsweise werden dann an die Verteilerfahrzeuge ausgegeben.

Durch die Vorhersage des zukünftigen Zustands des Fahrradleihsystems kann erreicht werden, dass bei der Umverteilung der Fahrräder nicht der aktuelle Zustand maßgebend ist, sondern auch berücksichtigt wird, wie sich der Zustand des Fahrradleihsystems durch Nutzungen der Fahrräder demnächst verändern wird. Dadurch kann eine verbesserte Verteilung der Fahrräder erreicht werden, die den Anforderungen an verfügbare Fahrräder beziehungsweise an verfügbaren Stationen besser entspricht. Durch die Berechnung der optimalen Umverteilungsroute mittels mehrerer Umverteilungsrouten zur Minimierung des Handlungsbedarfs ermöglicht ein Fahrradleihsystem, bei dem eine optimierte Umverteilung durchgeführt werden kann. Es kann insbesondere vorgesehen sein, nur aufgrund des zukünftigen Zustands des Fahrradleihsystems bestehenden Handlungsbedarf bei der Berechnung der optimalen Umverteilungsroute zu berücksichtigen. Dadurch kann das Verfahren zu einer möglichst ressourcenschonenden Umverteilungsroute führen.

Sind mehrere Umverteilungsfahrzeuge vorgesehen, können die Umverteilungsrouten kooperativ geplant werden, also so, dass die Umverteilungsroute eines Verteilerfahrzeugs die Umverteilungsrouten der anderen Verteilerfahrzeuge berücksichtigt und eine Optimierung über alle Umverteilungsrouten stattfindet.

Ein weiterer Vorteil des erfindungsgemäßen Verfahrens liegt darin, Handlungsbedarfe an freien Abstellplätzen und/oder an freien Fahrrädern vorherzusagen und durch die Umverteilung über die Umverteilungsrouten diese Handlungsbedarfe möglichst zu minimieren und dadurch eine verbesserte Benutzbarkeit des Fahrradleihsystems bereitstellen zu können. Dabei kann vorgesehen sein, die Handlungsbedarfe hinsichtlich freier Fahrräder und/oder freier Abstellplätze auch anhand von Uhrzeiten zu bestimmen, also vorherzusagen, zu welcher (zukünftigen) Uhrzeit eine Station Handlungsbedarf in Form von zusätzlich benötigten Fahrrädern und/oder in Form von zusätzlich benötigten freien Abstellplätzen hat und die Umverteilungsrouten derart zu planen, dass zu diesen Uhrzeiten zusätzliche Fahrräder bereitstehen beziehungsweise aus der Station entfernt werden.

Es kann vorgesehen sein, dass Verfahren auch in einem Hybrid-System einzusetzen und Fahrräder auch außerhalb der Stationen einzuladen beziehungsweise auszuladen und dies bei der Berechnung der Umverteilungsrouten zu berücksichtigen.

Es kann vorgesehen sein, dass die Stationen jeweils eine Mindestanzahl von freien Abstellplätzen und/oder Fahrrädern aufweisen sollen, wobei diese Mindestanzahl bei der Berechnung der Umverteilungsrouten berücksichtigt wird. Insgesamt kann vorgesehen sein, eine Nachfrage an freien Abstellplätzen beziehungsweise freien Fahrrädern zu einem bestimmten Zeitpunkt an diesem Zeitpunkt zu erfüllen.

Bei der Berechnung der Umverteilungsrouten kann berücksichtigt werden, dass nicht mehr Fahrräder ausgeladen werden können als freie Abstellplätze zur Verfügung stehen, insbesondere bei stationsgebundenen Systemen.

Es kann vorgesehen sein, dass das mindestens eine Verteilerfahrzeug in einem weiteren Verfahrensschritt die für dieses Verteilerfahrzeug ausgegebene optimale Umverteilungsroute abfährt und entsprechend der optimalen Umverteilungsroute Fahrräder aus- oder einlädt. Sind mehrere Verteilerfahrzeuge vorgesehen, kann in diesem Schritt jedes Verteilerfahrzeug die für dieses Verteilerfahrzeug ausgegebene optimale Umverteilungsroute abfahren und entsprechend der optimalen Umverteilungsroute Fahrräder aus- oder einladen.

Kerngedanke der Erfindung ist also, den aufgrund der Vorhersage der zukünftigen Zustands des Fahrradleihsystems erkannten Handlungsbedarf abzuarbeiten und dabei die Umverteilungsroute der eingesetzten Verteilerfahrzeuge so zu optimieren, dass durch die Umverteilung der Handlungsbedarf komplett oder zumindest so weit wie möglich reduziert wird, indem verschiedene Umverteilungsrouten hinsichtlich der durch sie erreichten Reduzierung des Handlungsbedarfs ausgewertet werden.

Es kann vorgesehen sein, in den Verteilerfahrzeugen entsprechende Ausgabemittel bereitzustellen, mit denen die Umverteilungsroute beispielsweise Kartenbasiert oder als Liste abzuarbeitender Wegpunkte mit Handlungsanweisungen hinsichtlich des Ein- beziehungsweise Ausladens von Fahrrädern angezeigt wird.

In einer Ausführungsform des Verfahrens werden zur Vorhersage des zukünftigen Zustands Informationen über vergangene Fahrten von Fahrrädern des Fahrradleihsystems und/oder Wetterdaten berücksichtigt. Dadurch wird die Vorhersage genauer. Es kann beispielsweise berücksichtigt werden, dass bei gutem Wetter, beispielsweise Sonnenschein mehr Fahrten zu einem bestimmten Ausflugsziel durchgeführt werden als bei Regen. Ferner können vergangene Fahrten einen Anhaltspunkt für demnächst anstehende Fahrten bilden.

In einer Ausführungsform des Verfahrens umfasst das Berechnen der optimalen Umverteilungsroute beziehungsweise der optimalen Umverteilungsrouten eine ganzzahlige lineare Optimierung. Ganzzahlige lineare Optimierungen sind deswegen sinnvoll einsetzbar, da immer nur ganze Fahrräder transportiert werden können und auch die Stationen nur ganze freie Abstellplätze aufweisen können.

In einer Ausführungsform des Verfahrens wird ein Gewichtungsfaktor für die Stationen, für die Handlungsbedarf besteht, beim Berechnen der optimalen Umverteilungsroute beziehungsweise der optimalen Umverteilungsrouten berücksichtigt. In einer Ausführungsform des Verfahrens ist der Gewichtungsfaktor anhand einer Priorisierung der Stationen bestimmt. Dadurch können beispielsweise Handlungsbedarfe an stark nachgefragten Stationen stärker gewichtet werden und/oder Stationen, die einer Kommune, in der das Fahrradleihsystem betrieben wird, besonders wichtig sind, höher priorisiert werden. Beispielsweise können Stationen in der Nähe von Sehenswürdigkeiten höher priorisiert werden.

In einer Ausführungsform des Verfahrens werden bei der Vorhersage des zukünftigen Zustands eine Beladung der Verteilerfahrzeuge mit Fahrrädern und die an die Verteilerfahrzeuge ausgegebenen optimalen Umverteilungsrouten berücksichtigt. Dadurch kann einfließen, welche Stationen demnächst Fahrräder aus einem Verteilerfahrzeug erhalten oder an ein Verteilerfahrzeug abgeben. Dies ermöglicht eine genauere Vorhersage. Beispielsweise können nicht mehr Fahrräder aufgenommen werden als die maximale Ladekapazität des Verteilerfahrzeugs. Es können nicht mehr Fahrräder entladen werden als der Beladung des Verteilerfahrzeugs entspricht.

In einer Ausführungsform des Verfahrens wird bei der Berechnung der optimalen Umverteilungsroute beziehungsweise der optimalen Umverteilungsrouten eine bereits vorliegende Beladung und eine maximale Ladekapazität des Verteilerfahrzeugs beziehungsweise der Verteilerfahrzeuge berücksichtigt. Dies ermöglicht, die optimalen Umverteilungsrouten noch genauer zu bestimmen.

In einer Ausführungsform des Verfahrens wird der zukünftige Zustand zum Ablauf einer ersten vorgegebenen Zeit vorhergesagt und das Verfahren nach einer zweiten vorgegebenen Zeit erneut ausgeführt. Dadurch kann das Verfahren schon während entsprechende Umverteilungen stattfinden, zur Berechnung weiterer Umverteilungsschritte genutzt werden. Hier kann beispielsweise, wenn sich herausstellt, dass eine bestimmte Station, an die Fahrräder gebracht werden sollen, in der Zwischenzeit von Nutzern des Fahrradleihsystems mit Fahrrädern bestückt wurde, das Verteilerfahrzeug, das zu dieser Station unterwegs ist, entsprechend umgelenkt werden. Die zweite vorgegebene Zeit kann dabei kleiner sein als die erste vorgegebene Zeit. Dadurch wird eine schnelle Aktualisierung des Vorhergesagten Zustands erreicht. Dies kann auch dazu verwendet werden, eine Vorhersagegüte zu berechnen und anhand der Vorhersagegüte die Vorhersage des zukünftigen Zustands zum zweiten Zeitpunkt angepasst werden.

In einer Ausführungsform des Verfahrens werden bei der Berechnung der optimalen Umverteilungsroute für das Verteilerfahrzeug oder der optimalen Umverteilungsrouten für die Verteilerfahrzeuge Informationen über eine Belastung eines Straßennetzes berücksichtigt. Dadurch können beispielsweise Verkehrsinformationen, Staus, Unfälle oder Baustellen bei der Wahl der Umverteilungsroute berücksichtigt werden und so das Umverteilen beschleunigt werden.

In einer Ausführungsform des Verfahrens umfassen die Fahrräder Elektrofahrräder. Bei der Vorhersage des zukünftigen Zustands des Fahrradleihsystems und bei der Berechnung der optimalen Umverteilungsroute für das Verteilerfahrzeug oder der optimalen Umverteilungsrouten für die Verteilerfahrzeuge wird ein Ladezustand der Elektrofahrräder berücksichtigt. Handlungsbedarf kann also auch entstehen, wenn in einer Station zwar ausreichend Elektrofahrräder vorhanden sind, diese jedoch nicht ausreichend geladen sind. Die nicht ausreichend geladenen Elektrofahrräder können dann an andere Stationen mit weniger Nachfrage nach Elektrofahrrädern verbracht und durch geladene Elektrofahrräder ersetzt werden.

In einer Ausführungsform des Verfahrens weisen die Verteilerfahrzeuge eine Lademöglichkeit für Elektrofahrräder auf. Eine innerhalb einer Fahrzeit übertragbare Ladung wird bei der Berechnung der optimalen Umverteilungsroute für das Verteilerfahrzeug oder der optimalen Umverteilungsrouten für die Verteilerfahrzeuge berücksichtigt. Dies ermöglicht ein Laden der Elektrofahrräder während der Umverteilung. Dadurch kann eine Verfügbarkeit für geladene Elektrofahrräder verbessert werden.

In einer Ausführungsform des Verfahrens wird bei der Berechnung der optimalen Umverteilungsroute für das Verteilerfahrzeug oder der optimalen Umverteilungsrouten für die Verteilerfahrzeuge eine Information über einen Energiespeicherinhalt der Verteilerfahrzeuge berücksichtigt. Dies ermöglicht beispielsweise, Verteilerfahrzeuge mit Elektroantrieb vorzusehen. Insbesondere kann dies mit der Lademöglichkeit für Elektrofahrräder kombiniert werden und auch die während der Ladung der Elektrofahrräder aus dem Energiespeicher entnommene Energie berücksichtigt werden. Ferner kann vorgesehen sein, dass Verteilerfahrzeuge mit Elektroantrieb an den Stationen geladen werden, während die Fahrräder eingeladen oder ausgeladen werden oder während an den Fahrrädern notwendigen Reparaturmaßnahmen.

Lademöglichkeit für Elektrofahrräder weist das Fahrradleihsystem mehrere Verteilerfahrzeuge mit Elektroantrieb auf. Die Verteilerfahrzeuge mit Elektroantrieb können an den Stationen geladen werden. Bei der Berechnung der optimalen Umverteilungsroute beziehungsweise der optimalen Umverteilungsrouten wird ein möglicher Wechsel des Verteilerfahrzeugs berücksichtigt. Es können beispielsweise mehrere Verteilerfahrzeuge mit Elektroantrieb an bestimmten Stationen abgestellt und geladen werden. Geht in einem aktuell in Benutzung befindlichen Verteilerfahrzeuge mit Elektroantrieb die Ladung zur Neige, kann dieses gegen ein geladenes Verteilerfahrzeuge mit Elektroantrieb einer solchen Station ausgetauscht werden. Dies wird bei der Routenwahl berücksichtigt.

Die oben beschriebenen Eigenschaften, Merkmale und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen in jeweils schematisierter Darstellung
- FIG 1: ein Ablaufdiagramm des Erfindungsgemäßen Verfahrens;
- FIG 2: eine Systemarchitektur einer Recheneinheit zur Durchführung des Verfahrens;
- FIG 3: ein Fahrradleihsystem;
- FIG 4: einen zukünftigen Zustand des Fahrradleihsystems;
- FIG 5: Umverteilungsrouten im Fahrradleihsystem;
- FIG 6: ein Verteilerfahrzeug; und
- FIG 7: ein weiteres Fahrradleihsystem.

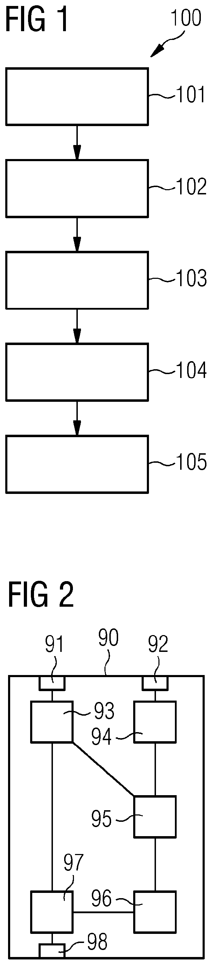

FIG 1 zeigt ein Ablaufdiagramm 100 eines erfindungsgemäßen Verfahrens zur Umverteilung von Fahrrädern eines Fahrradleihsystems mit Stationen, Fahrrädern und Verteilerfahrzeugen. In einem ersten Verfahrensschritt 101 werden Standorte der Fahrräder und eine Anzahl der belegten und/oder freien Abstellplätze der Stationen aus einem Systemdatenspeicher ausgelesen. In einem zweiten Verfahrensschritt 102 wird ein zukünftiger Zustand des Fahrradleihsystems vorhergesagt, wobei der zukünftige Zustand zukünftige Standorte der Fahrräder und zukünftige Anzahlen von freien und/oder belegten Abstellplätzen der Stationen umfasst. In einem dritten Verfahrensschritt 103 werden Stationen, für die aufgrund des zukünftigen Zustands Handlungsbedarf besteht, ermittelt, wobei der Handlungsbedarf ein Entfernen oder ein Hinzufügen von Fahrrädern umfasst. In einem vierten Verfahrensschritt 104 wird eine optimale Umverteilungsroute für das Verteilerfahrzeug oder werden optimale Umverteilungsrouten für die Verteilerfahrzeuge berechnet, wobei dazu mehrere Umverteilungsrouten für jedes Verteilerfahrzeug berechnet werden, die jeweils Anweisungen, welche Stationen anzufahren und ob an diesen Stationen Fahrräder aufzunehmen oder abzustellen sind, umfasst. Die Berechnung der optimalen Umverteilungsroute beziehungsweise der optimalen Umverteilungsrouten wird derart durchgeführt, dass der Handlungsbedarf aufgrund der durch die Umverteilungsrouten erfolgten Umverteilung der Fahrräder möglichst gering wird. In einem fünften Verfahrensschritt 105 wird die optimale Umverteilungsroute beziehungsweise werden die optimalen Umverteilungsrouten an das Verteilerfahrzeug beziehungsweise die Verteilerfahrzeuge ausgegeben.

FIG 2 zeigt eine Steuereinheit 90 zur Ausführung des Verfahrens 100 der FIG 1. Die Steuereinheit 90 weist dabei einen ersten Eingang 91 und einen zweiten Eingang 92 auf. Der erste Eingang 91 ist mit einem Systemdatenspeicher 93 verbunden. Über den ersten Eingang 91 können Daten, welche durch das Fahrradleihsystem generiert werden, beispielsweise Positionen der Fahrräder, Informationen über freie oder belegte Abstellplätze der Stationen, Positionen der Verteilerfahrzeuge, Informationen über mit den Fahrrädern durchgeführte Fahrten eingelesen und anschließend im Systemdatenspeicher 93 abgelegt werden. Der zweite Eingang 92 ist mit einem Speicher 94 für externe Daten verbunden. Über den zweiten Eingang 92 können externe Daten wie beispielsweise Wetterdaten oder Informationen über eine Verkehrslage eingelesen und im Speicher 94 abgelegt werden. Ein Vorhersagemodul 95 kann auf die Daten des Systemdatenspeichers 93 und des Speichers 94 zugreifen. Das Vorhersagemodul 95 ist dabei eingerichtet, den zweiten Verfahrensschritt 102 des Verfahrens 100 der FIG 1 durchzuführen. Der im zweiten Verfahrensschritt 102 vorhergesagte zukünftige Zustand kann dann in einem Vorhersagespeicher 96 abgelegt werden. Ein Routenplanungsmodul 97 kann auf die Daten des Systemdatenspeichers 93 und des Vorhersagespeichers 96 zugreifen und anschließend den dritten Verfahrensschritt 103 und den vierten Verfahrensschritt 104 durchführen. Im fünften Verfahrensschritt 105 wird die optimale Route an mindestens ein Verteilerfahrzeug über einen Ausgang 98 ausgegeben. Der erste Verfahrensschritt 101 kann dabei sowohl vom Vorhersagemodul 95 als auch vom Routenplanungsmodul 97 durchgeführt werden. Alternativ können die aus dem Systemdatenspeicher 93 ausgelesenen Daten nach der Durchführung des zweiten Verfahrensschritts zusätzlich im Vorhersagespeicher 96 abgelegt werden. In diesem Fall kann die Durchführung von drittem Verfahrensschritt 103 und viertem Verfahrensschritt 104 durch das Routenplanungsmodul 97 auch ohne Zugriff auf den Systemdatenspeicher 93 erfolgen. Das Vorhersagemodul 95 und das Routenplanungsmodul 97 können durch eine oder mehrere Recheneinheiten gebildet sein. Der Systemdatenspeicher 93, der Speicher 94 und der Vorhersagespeicher 96 können innerhalb einer Speichereinheit oder innerhalb mehrerer Speichereinheiten angeordnet sein.

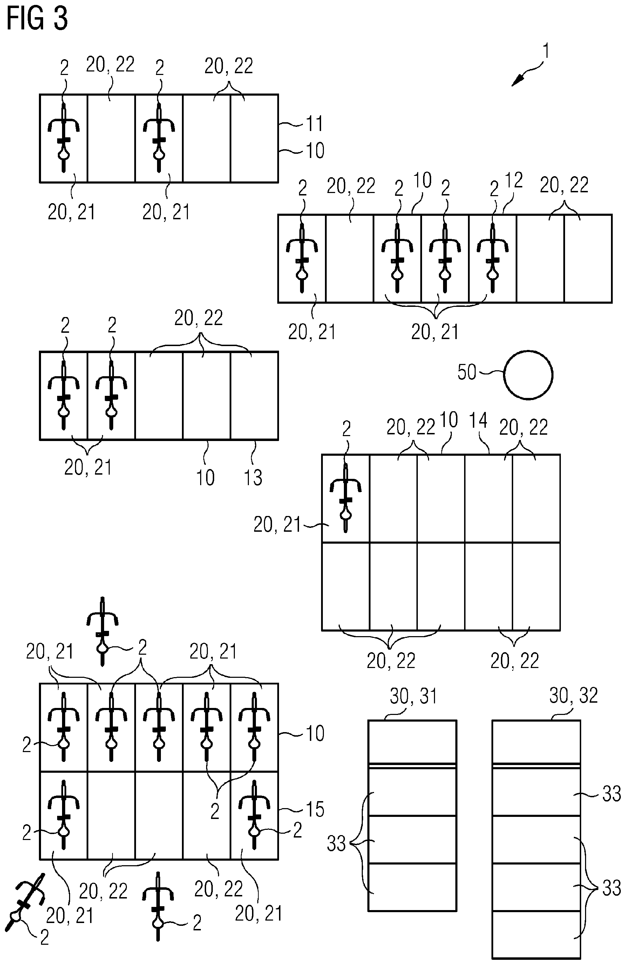

FIG 3 zeigt eine schematische Ansicht eines Fahrradleihsystems 1 bestehend aus Fahrrädern 2, Stationen 10 und Verteilerfahrzeugen 30. Die Fahrräder 2 können dabei auch Elektrofahrräder oder andere durch Muskelkraft oder durch Elektroantrieb bewegbare Fahrzeuge sein, die in die Verteilerfahrzeuge 30 geladen werden können. Die Stationen 10 weisen jeweils eine Anzahl von Abstellplätzen 20 auf. Eine erste Station 11 weist fünf Abstellplätze 20 auf, von denen zwei mit jeweils einem Fahrrad 2 belegt sind. Somit weist die erste Station 11 zwei belegte Abstellplätze 21 und drei freie Abstellplätze 22 auf. Eine zweite Station 12 weist sieben Abstellplätze 20 auf, von denen vier mit jeweils einem Fahrrad 2 belegt sind. Somit weist die zweite Station 12 vier belegte Abstellplätze 21 und drei freie Abstellplätze 22 auf. Eine dritte Station 13 weist fünf Abstellplätze 20 auf, von denen zwei mit jeweils einem Fahrrad 2 belegt sind. Somit weist die dritte Station 13 zwei belegte Abstellplätze 21 und drei freie Abstellplätze 22 auf. Eine vierte Station 14 weist zehn Abstellplätze 20 auf, von denen einer mit einem Fahrrad 2 belegt ist. Somit weist die vierte Station 14 einen belegten Abstellplatz 21 und neun freie Abstellplätze 22 auf. Eine fünfte Station 15 weist zehn Abstellplätze 20 auf, von denen sieben mit jeweils einem Fahrrad 2 belegt sind. Somit weist die fünfte Station 15 sieben belegte Abstellplätze 21 und drei freie Abstellplätze 22 auf. Eine andere Anzahl an Stationen 10 mit einer jeweiligen anderen Anzahl an Abstellplätzen 20 ist ebenfalls denkbar.

Ein erstes Verteilerfahrzeug 31 weist drei Ladeplätze 33 auf, ein zweites Verteilerfahrzeug 32 weist vier Ladeplätze 33 auf. Zusätzlich zu den in den Stationen 10 befindlichen Fahrrädern 2 sind auch weitere Fahrräder zwischen den Stationen 10 in Benutzung.

Die Positionen der Fahrräder 2 sowie die belegten Abstellplätze 21 sowie die freien Abstellplätze 21 können Teil der im Systemdatenspeicher 93 der FIG 2 hinterlegten Daten sein und durch die Recheneinheit 90 über den ersten Eingang 91 beispielsweise von den Fahrrädern 2 sowie den Stationen 10 empfangen werden. Ebenso können Positionen und Beladungszustand der Verteilerfahrzeuge 30 Teil der im Systemdatenspeicher 93 der FIG 2 hinterlegten Daten sein und durch die Recheneinheit 90 über den ersten Eingang 91 empfangen werden.

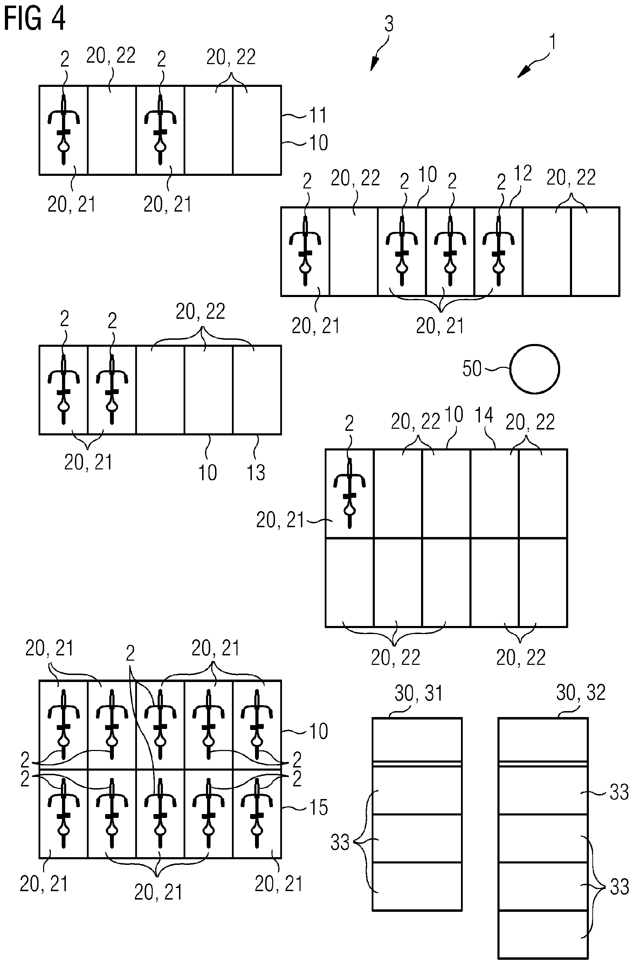

FIG 4 zeigt eine Vorhersage eines zukünftigen Zustands 3 des Fahrradleihsystems 1 der FIG 3. Die Benutzung der Fahrräder 2 des Fahrradleihsystems 1 wird nach dieser Vorhersage dazu führen, dass drei weitere Fahrräder 2 in der fünften Station 15 abgestellt werden. Da die fünfte Station 15 nun komplett belegt ist, also nur noch belegte Abstellplätze 21 aufweist, ist Handlungsbedarf dadurch gegeben, dass Fahrräder 2 aus der fünften Station 15 entfernt werden sollten, um dort auch nach der Ankunft der drei weiteren Fahrräder 2 entsprechend freie Abstellplätze 22 anbieten zu können. Alternativ oder zusätzlich kann sich in der Vorhersage ergeben, dass bei der vierten Station 14, die aktuell nur mit einem Fahrrad 2 besetzt ist, demnächst weitere Fahrräder 2 benötigt werden. Ebenso kann die Vorhersage ergeben, dass an der ersten Station 11 mehr als die dort vorhandenen zwei Fahrräder benötigt werden. Auch diese Vorhersagen des zukünftigen Zustands 3 ergeben einen entsprechenden Handlungsbedarf.

Dabei kann vorgesehen sein, den zukünftigen Zustand 3 Handlungsbedarfe hinsichtlich freier Fahrräder 2 und/oder freier Abstellplätze 22 auch anhand von Uhrzeiten zu bestimmen. Der zukünftige Zustand 3 kann also beispielsweise für eine vorbestimmte Uhrzeit, die beispielsweise der aktuellen Uhrzeit plus einer vorbestimmten Zeitspanne entspricht, berechnet werden. Es wird also vorhergesagt, zu welcher (zukünftigen) Uhrzeit eine Station 10 Handlungsbedarf in Form von zusätzlich benötigten Fahrrädern 2 und/oder in Form von zusätzlich benötigten freien Abstellplätzen 22 hat und die Umverteilungsrouten derart zu planen, dass zu diesen Uhrzeiten zusätzliche Fahrräder 2 bereitstehen beziehungsweise aus der Station 10 entfernt werden. Ferner kann ein weiterer, nicht in FIG 4 gezeigter zukünftiger Zustand zu einer weiteren zukünftigen Uhrzeit berechnet und bei den Umverteilungsrouten berücksichtigt werden, beispielsweise indem mittels den Umverteilungsrouten eine Reihenfolge der anzufahrenden Stationen 10 festgelegt wird.

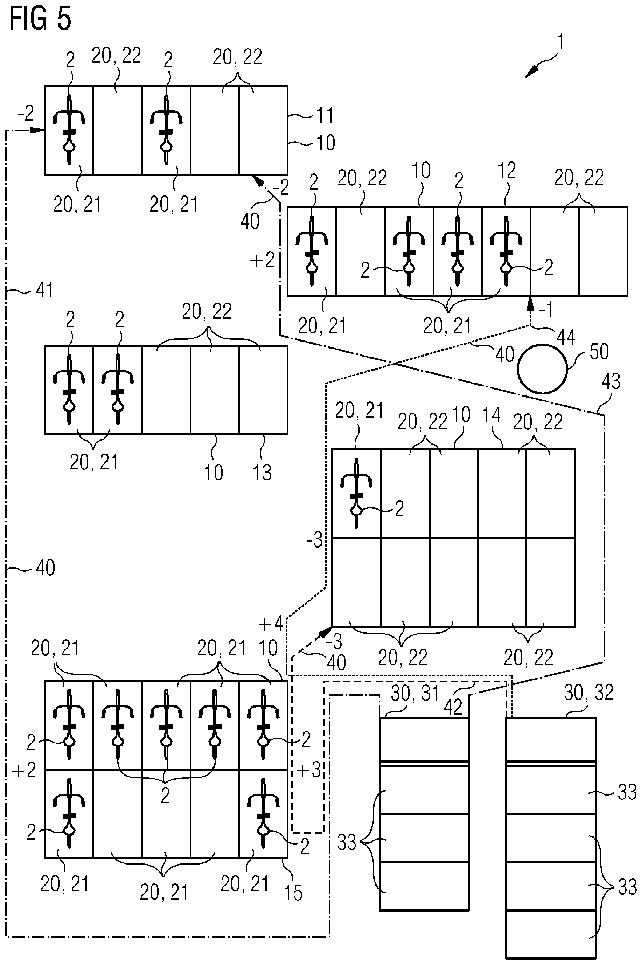

FIG 5 zeigt den aktuellen Zustand des Fahrradleihsystems 1 und verschiedene berechnete Umverteilungsrouten 40 für die Verteilerfahrzeuge 30. Eine erste Umverteilungsroute 41 führt das erste Verteilerfahrzeug 31 zur fünften Station 15. Dort soll das erste Verteilerfahrzeug zwei Fahrräder 2 aufnehmen, anschließend zur ersten Station 11 bringen und dort ausladen. Eine zweite Umverteilungsroute führt das zweite Verteilerfahrzeug 32 zur fünften Station 15. Dort soll das zweite Verteilerfahrzeug 32 drei Fahrräder 2 aufnehmen, anschließend zur vierten Station 14 bringen und dort wieder ausladen. Das Aufnehmen und Ausladen der Fahrräder 2 ist mit positiven beziehungsweise negativen Zahlen an den Umverteilungsrouten 41, 42 im Bereich der Stationen 11, 14, 15 angedeutet. Somit wären die für FIG 4 beschriebenen Handlungsbedarfe abgearbeitet. Es kann jedoch sein, dass auf der direkten Verkehrsverbindung zwischen der fünften Station 15 und der ersten Station 11 ein Stau vorliegt, so dass die erste Umverteilungsroute 41 nicht optimal ist. Eine dritte Umverteilungsroute 43 führt das erste Verteilerfahrzeug 31 zur zweiten Station 12. Dort soll das erste Verteilerfahrzeug 31 zwei Fahrräder 2 einladen, zur ersten Station 11 bringen und dort ausladen. Eine vierte Umverteilungsroute 44 führt das zweite Verteilerfahrzeug 32 zur fünften Station 15. Dort sollen vier Fahrräder 2 aufgeladen werden. Anschließend führt die vierte Umverteilungsroute 44 zur vierten Station 14, wo drei Fahrräder 2 ausgeladen werden sollen. Anschließend führt die vierte Umverteilungsroute 44 zur zweiten Station 12, an der das verbliebene Fahrrad 2 ausgeladen werden soll. Da mittels der dritten Umverteilungsroute 43 und der vierten Umverteilungsroute die Handlungsbedarfe ebenfalls erfüllt werden, jedoch die direkte Verkehrsverbindung zwischen der fünften Station 15 und der ersten Station 11 nicht genutzt werden muss, stellen die dritte Umverteilungsroute 43 beziehungsweise die vierte Umverteilungsroute 44 optimale Umverteilungsrouten dar. Die dritte Umverteilungsroute 43 beziehungsweise die vierte Umverteilungsroute 44 werden also an das erste Verteilerfahrzeug 31 beziehungsweise das zweite Verteilerfahrzeug 32 ausgegeben.

In einem Ausführungsbeispiel ist ein Ort 50 außerhalb der Stationen 10 vorgesehen, wobei eine Umverteilungsroute 40 am Ort 50 vorbeiführt und dort Fahrräder 2 ausgeladen oder aufgenommen werden. In einem Ausführungsbeispiel werden bei der Vorhersage des zukünftigen Zustands 3 des Fahrradleihsystems 1 Informationen über vergangene Fahrten und/oder Wetterdaten berücksichtigt.

In einem Ausführungsbeispiel erfolgt das Berechnen der optimalen Umverteilungsrouten 43, 44 mittels ganzzahliger linearer Optimierung. In einem Ausführungsbeispiel wird ein Gewichtungsfaktor für die Stationen 10, bei denen Handlungsbedarf besteht, beim Berechnen der optimalen Umverteilungsrouten 43, 44 berücksichtigt. Beispielsweise könnte das Verbringen von Fahrrädern 2 an die erste Station 11 einen niedrigeren Gewichtungsfaktor haben als das Verbringen von Fahrrädern 2 an die vierte Station 14. Wenn nun nur das erste Verteilerfahrzeug 31 zur Verfügung steht, können nicht alle Handlungsbedarfe erfüllt werden. Aufgrund des Gewichtungsfaktors würde die optimale Umverteilungsroute das erste Fahrzeug 31 dann von der fünften Station 15 zur vierten Station 14 führen und der Handlungsbedarf der ersten Station 11 erst anschließend behoben. Der Gewichtungsfaktor kann anhand einer Priorisierung der Stationen 10 bestimmt sein. Die Priorisierung kann beispielsweise aufgrund einer Position der Stationen 10 an bestimmten Sehenswürdigkeiten erfolgen oder anhand einer Vorgabe einer Kommune, in der das Fahrradleihsystem 1 betrieben wird.

In einem Ausführungsbeispiel wird die Beladung der Verteilerfahrzeuge 30 und die bereits an die Verteilerfahrzeuge 30 ausgegebenen Umverteilungsrouten 40 bei der Vorhersage des zukünftigen Zustands 3 des Fahrradleihsystems 1 berücksichtigt. Dies kann beispielsweise nach einem ersten Durchlauf des Verfahrens erfolgen, wenn die Verteilerfahrzeuge 30 bereits auf dem Weg zu Stationen 10 sind und in der Zwischenzeit Benutzer des Systems weitere Fahrräder bewegt haben, so dass sich die Handlungsbedarfe verändert haben. Haben beispielsweise mehrere Benutzer Fahrräder 2 am Ende einer Fahrt an der vierten Station 14 zurückgegeben, dann ist der Handlungsbedarf dort bereits erfüllt, nachdem das zweite Verteilerfahrzeug 32 vier Fahrräder 2 an der fünften Station aufgenommen hat. Nach einem weiteren Durchlauf des Verfahrens kann sich nun ergeben, dass die optimale Umverteilungsroute das zweite Fahrzeug 32 nicht mehr zur vierten Station 14 sondern an einen anderen Ort führt. Diese optimale Umverteilungsroute wird nun an das zweite Verteilerfahrzeug 32 ausgesendet. Sofern sich die optimale Umverteilungsroute des ersten Verteilerfahrzeugs 31 nicht ändert, wird keine neue Umverteilungsroute an das erste Verteilerfahrzeug 31 ausgesendet.

In einem Ausführungsbeispiel wird eine maximale Ladekapazität der Verteilerfahrzeuge 30 und die bereits vorliegende Beladung der Verteilerfahrzeuge 30 bei der Berechnung der optimalen Umverteilungsroute berücksichtigt. In einem Ausführungsbeispiel wird der zukünftige Zustand 3 des Fahrradleihsystems 1 zum Ablauf einer ersten vorgegebenen Zeit vorhergesagt, wobei die erste vorgegebene Zeit bezogen auf die aktuelle Zeit sein kann. Das Verfahren wird nach einer zweiten vorgegebenen Zeit erneut durchgeführt, wobei die zweite vorgegebene Zeit bezogen auf die aktuelle Zeit sein kann. Die zweite vorgegebene Zeit kann kleiner als die erste vorgegebene Zeit sein. Dadurch kann vorkommen, dass sich die optimale Umverteilungsroute eines Verteilerfahrzeugs ändert. Diese geänderte optimale Umverteilungsroute wird dann an das entsprechende Verteilerfahrzeug gesendet.

In einem Ausführungsbeispiel sind die Fahrräder 2 zumindest teilweise Elektrofahrräder. Es können auch alle Fahrräder 2 als Elektrofahrräder ausgestaltet sein. In diesem Fall kann bei der Vorhersage des zukünftigen Zustands 3 des Fahrradleihsystems 1 und bei der Berechnung der optimalen Umverteilungsroute 43 für das Verteilerfahrzeug 31 oder der optimalen Umverteilungsrouten 43, 44 für die Verteilerfahrzeuge 31, 32 ein Ladezustand der Elektrofahrräder berücksichtigt werden. Beispielsweise kann die optimale Umverteilungsroute 43, 44 ebenfalls Informationen darüber enthalten, welche Fahrräder 2 an den Stationen 10 aufgeladen werden sollen, beispielsweise die Fahrräder 2, deren Energiespeicher am meisten geladen ist.

In einem Ausführungsbeispiel sind die optimalen Umverteilungsrouten 43, 44 derart berechnet, dass eine Gesamtoptimierung des Fahrradleihsystems hinsichtlich verfügbarer Fahrräder 2 und freier Abstellplätze 22 erfolgt. Dadurch sind bessere Ergebnisse möglich verglichen mit einer Optimierung der einzelnen Umverteilungsrouten 41, 42, 43, 44 der einzelnen Verteilerfahrzeuge 31, 32.

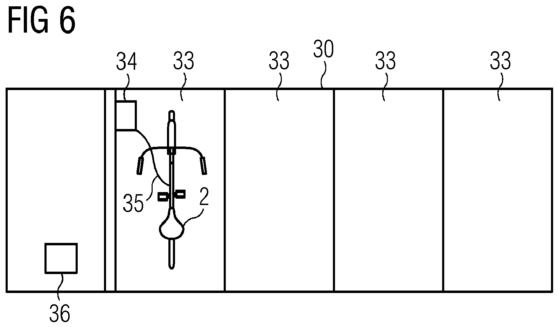

FIG 6 zeigt ein Umverteilungsfahrzeug 30 mit einer Lademöglichkeit 34 für Elektrofahrräder. Ein als Elektrofahrrad ausgestaltetes Fahrrad 2 ist auf einem Ladeplatz 33 des Verteilerfahrzeugs 30 angeordnet und mit einem Kabel 35 mit der Lademöglichkeit verbunden. Während einer Fahrt des Verteilerfahrzeugs 30 kann das Fahrrad 2 über die Lademöglichkeit 34 und das Kabel 35 geladen werden. Die dafür notwendige Energie kann durch einen Verbrennungsmotor des Verteilerfahrzeugs 30, oder wenn dieses einen Elektroantrieb aufweist, aus einem Energiespeicher des Verteilerfahrzeugs zur Verfügung gestellt werden.

In einem Ausführungsbeispiel des Verfahrens 100 wird bei der Berechnung der optimalen Umverteilungsroute 43 eine während einer Fahrzeit mittels der Ladevorrichtung 34 übertragbare Ladung berücksichtigt. Dabei kann vorgesehen sein, dass wenn das Verteilerfahrzeug 30 wie beispielsweise für die vierte Umverteilungsroute 44 der FIG 5 erläutert, Fahrräder 2 an mehreren Stationen ablädt, drei Fahrräder 2 mit einer höheren Ladung und ein Fahrrad 2 mit einer niedrigeren Ladung aufgenommen werden und an der vierten Station 14 zunächst diejenigen Fahrräder 2 mit der höheren Ladung abgeladen werden. Während der gesamten Fahrt von der fünften Station 15 zur vierten Station 14 und weiter zur zweiten Station 12 wird das dort abzuladende Fahrrad 2 geladen. Um dies umzusetzen, ist es sinnvoll einerseits die Ladezustände der Fahrräder 2 der fünften Station 15 und andererseits die während der Fahrt übertragbare Ladung zu berücksichtigen. Ferner kann vorgesehen sein, einen Energiespeicherinhalt, also den Energiegehalt eines Energiespeichers 36 des Verteilerfahrzeugs bei der Berechnung der optimalen Umverteilungsroute zu berücksichtigen.

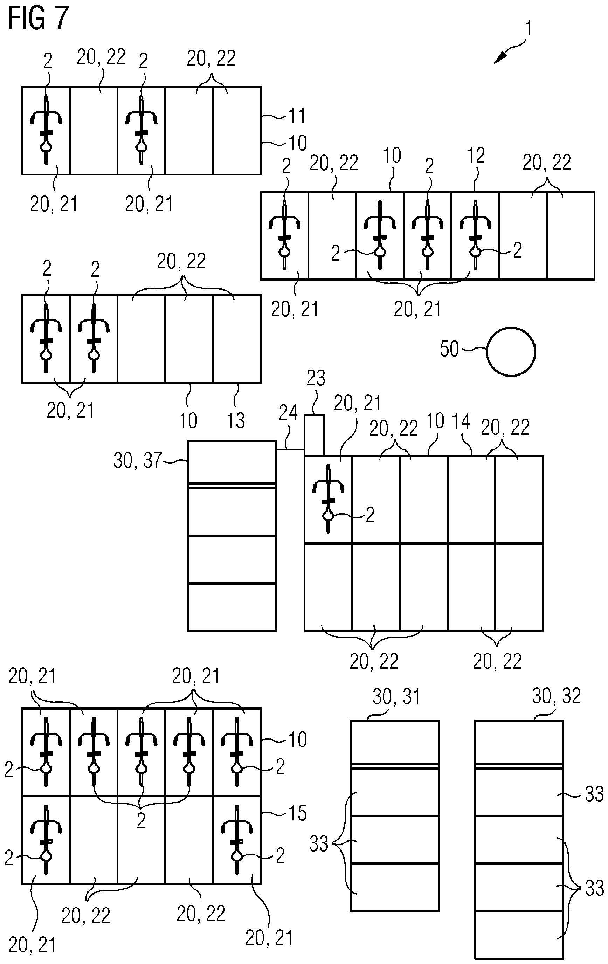

FIG 7 zeigt das Fahrradleihsystem 1 der FIG 3 bis 5, wobei die vierte Station 14 zusätzlich eine Ladesäule 23 aufweist, die mittels eines weiteren Kabels 24 mit einem dritten Verteilerfahrzeug 37 verbunden ist. Das dritte Verteilerfahrzeug 37 wird geladen. Es kann vorgesehen sein, bei der Berechnung der optimalen Umverteilungsroute einen Wechsel des Verteilerfahrzeugs zu berücksichtigen. Beispielsweise könnte die vierte Umverteilungsroute 44 der FIG 5 derart angepasst werden, dass das zweite Verteilerfahrzeug 32 an der vierten Station gegen das dritte Verteilerfahrzeug 37 getauscht wird und die vierte Umverteilungsroute 44 mit dem dritten Verteilerfahrzeug 37 fortgesetzt wird.

## Patentansprüche

1. Verfahren (100) zum Umverteilen von Fahrrädern (2) eines Fahrradleihsystems (1), wobei das Fahrradleihsystem (1) Fahrräder (2), Stationen (10) und mindestens ein Verteilerfahrzeug (30, 31, 32) umfasst, wobei jede Station (10) eine vorgegebene Anzahl von Abstellplätzen (20) aufweist, umfassend die Schritte:
- Auslesen von Standorten der Fahrräder (2) und einer Anzahl der belegten und/oder freien Abstellplätze (20, 21, 22) der Stationen (10) aus einem Systemdatenspeicher (93);
- Vorhersage eines zukünftigen Zustands (3) des Fahrradleihsystems (1), wobei der zukünftige Zustand (3) zukünftige Standorte der Fahrräder (2) und zukünftige Anzahlen von freien und/oder belegten Abstellplätzen (20, 21, 22) der Stationen (10) umfasst;
- Ermitteln von Stationen (10), für die aufgrund des zukünftigen Zustands (3) Handlungsbedarf besteht, wobei der Handlungsbedarf ein Entfernen oder ein Hinzufügen von Fahrrädern (2) umfasst;
- Berechnen einer optimalen Umverteilungsroute (43) für das Verteilerfahrzeug (30, 31) oder optimalen Umverteilungsrouten (43, 44) für die Verteilerfahrzeuge (30, 31, 32), wobei mehrere Umverteilungsrouten (40, 41, 42, 43, 44) für jedes Verteilerfahrzeug (30, 31, 32) berechnet werden, wobei die Umverteilungsrouten (40, 41, 42, 43, 44) jeweils Anweisungen, welche Stationen (10) anzufahren und ob an diesen Stationen (10) Fahrräder (2) aufzunehmen oder abzustellen sind, umfasst, wobei die Berechnung der optimalen Umverteilungsroute (43) beziehungsweise der optimalen Umverteilungsrouten (43, 44) derart durchgeführt wird, dass der Handlungsbedarf aufgrund der durch die Umverteilungsrouten (40, 41, 42, 43, 44) erfolgten Umverteilung der Fahrräder (2) möglichst gering wird;
- Ausgabe der optimalen Umverteilungsroute (43) beziehungsweise der optimalen Umverteilungsrouten (43, 44) an das Verteilerfahrzeug (30, 31) beziehungsweise die Verteilerfahrzeuge (30, 31, 32).

2. Verfahren (100) nach Anspruch 1, wobei zur Vorhersage des zukünftigen Zustands (3) Informationen über vergangene Fahrten von Fahrrädern (2) des Fahrradleihsystems (1) und/oder Wetterdaten berücksichtigt werden.

3. Verfahren (100) nach Anspruch 1 oder 2, wobei das Berechnen der optimalen Umverteilungsroute (43) beziehungsweise der optimalen Umverteilungsrouten (43, 44) eine ganzzahlige lineare Optimierung umfasst.

4. Verfahren (100) nach einem der Anspruche 1 bis 3, wobei ein Gewichtungsfaktor für die Stationen (10), für die Handlungsbedarf besteht, beim Berechnen der optimalen Umverteilungsroute (43) beziehungsweise der optimalen Umverteilungsrouten (43, 44) berücksichtigt wird.

5. Verfahren (100) nach einem der Ansprüche 1 bis 4, wobei bei der Vorhersage des zukünftigen Zustands (3) eine Beladung der Verteilerfahrzeuge (30, 31, 32) mit Fahrrädern (2) und die an die Verteilerfahrzeuge (30, 31, 32) ausgegebenen optimalen Umverteilungsrouten (43, 44) berücksichtigt werden.

6. Verfahren (100) nach einem der Ansprüche 1 bis 5, wobei bei der Berechnung der optimalen Umverteilungsroute (43) beziehungsweise der optimalen Umverteilungsrouten (43, 44) eine bereits vorliegende Beladung und eine maximale Ladekapazität des Verteilerfahrzeugs (30, 31) beziehungsweise der Verteilerfahrzeuge (30, 31, 32) berücksichtigt werden.

7. Verfahren (100) nach einem der Ansprüche 1 bis 6, wobei der zukünftige Zustand zum Ablauf einer ersten vorgegebenen Zeit vorhergesagt wird und das Verfahren (100) nach einer zweiten vorgegebenen Zeit erneut ausgeführt wird.

8. Verfahren (100) nach einem der Ansprüche 1 bis 7, wobei bei der Berechnung der optimalen Umverteilungsroute (43) für das Verteilerfahrzeug (30, 31) oder der optimalen Umverteilungsrouten (43, 44) für die Verteilerfahrzeuge (30, 31, 32) Informationen über eine Belastung eines Straßennetzes berücksichtigt werden.

9. Verfahren (100) nach einem der Ansprüche 1 bis 8, wobei die Fahrräder (2) Elektrofahrräder umfassen und bei der Vorhersage des zukünftigen Zustands (3) des Fahrradleihsystems (1) und bei der Berechnung der optimalen Umverteilungsroute (43) für das Verteilerfahrzeug (31, 32) oder der optimalen Umverteilungsrouten (43, 44) für die Verteilerfahrzeuge (30, 31, 32) ein Ladezustand der Elektrofahrräder berücksichtigt wird.

10. Verfahren (100) nach Anspruch 9, wobei die Verteilerfahrzeuge (30, 31, 32) eine Lademöglichkeit (34) für Elektrofahrräder aufweisen und eine innerhalb einer Fahrzeit übertragbare Ladung bei der Berechnung der optimalen Umverteilungsroute (43) für das Verteilerfahrzeug (30, 31) oder der optimalen Umverteilungsrouten (43, 44) für die Verteilerfahrzeuge (30, 31, 32) berücksichtigt wird.

11. Verfahren nach Anspruch 10, wobei die Elektrofahrräder während einer Fahrt des Verteilerfahrzeugs (30, 31, 32) geladen werden.

12. Verfahren (100) nach einem der Ansprüche 1 bis 11, wobei bei der Berechnung der optimalen Umverteilungsroute (43) für das Verteilerfahrzeug (30, 31) oder der optimalen Umverteilungsrouten (43, 44) für die Verteilerfahrzeuge (30, 31, 32) eine Information über einen Energiespeicherinhalt der Verteilerfahrzeuge (30, 31, 32) berücksichtigt wird.

13. Verfahren (100) nach einem der Ansprüche 1 bis 12, wobei das Fahrradleihsystem (1) mehrere Verteilerfahrzeuge (30, 31, 32, 37) mit Elektroantrieb aufweist, wobei die Verteilerfahrzeuge (30, 31, 32, 37) mit Elektroantrieb an den Stationen (10) geladen werden können, wobei bei der Berechnung der optimalen Umverteilungsroute (43) beziehungsweise der optimalen Umverteilungsrouten (43, 44) ein möglicher Wechsel des Verteilerfahrzeugs (30, 31, 32, 37) berücksichtigt wird.

14. Computerprogramm, umfassend Befehle, die bei der Ausführung des Computerprogramms durch einen Computer diesen veranlassen, das Verfahren (100) nach einem der Ansprüche 1 bis 13 auszuführen.

15. Steuereinheit (90), umfassend Kommunikationsmittel (91, 92, 98) und eine Recheneinheit (95, 97), wobei die Recheneinheit (95, 97) eingerichtet ist, eines der Verfahren (100) der Ansprüche 1 bis 13 durchzuführen und dazu mittels der Kommunikationsmittel (91, 92, 98) mit einem Verteilerfahrzeug (30) und/oder Einrichtungen zur Ermittlung der Standorte der Fahrräder (2) und den Stationen (10) zu kommunizieren.
